(19) Europäisches Patentamt

European Patent Office

Office européen des brevets

(11) Veröffentlichungsnummer: **0 418 479 B1**

(12) **EUROPÄISCHE PATENTSCHRIFT**

(45) Veröffentlichungstag der Patentschrift: **28.12.94**

(21) Anmeldenummer: **90111816.6**

(22) Anmeldetag: **22.06.90**

(51) Int. Cl.⁵: **B01F 17/56**, C08J 3/03

(54) Emulgatoren zur Herstellung von lagerstabilen, wässrigen Polysiloxan-bzw. Polysiloxan-Paraffinöl-Emulsionen.

(30) Priorität: **04.08.89 DE 3925846**

(43) Veröffentlichungstag der Anmeldung:
**27.03.91 Patentblatt 91/13**

(45) Bekanntmachung des Hinweises auf die
Patenterteilung:
**28.12.94 Patentblatt 94/52**

(84) Benannte Vertragsstaaten:
**DE ES FR GB IT NL**

(56) Entgegenhaltungen:
**EP-A- 0 043 091       EP-A- 0 077 167
EP-A- 0 092 877       EP-A- 0 094 118
EP-A- 0 157 323       EP-A- 0 200 916
EP-A- 0 216 301       EP-A- 0 230 598
FR-A- 2 017 240       GB-A- 2 087 882
US-A- 3 839 318       US-A- 4 778 624**

(73) Patentinhaber: **HÜLS AKTIENGESELLSCHAFT**

**D-45764 Marl (DE)**

(72) Erfinder: **Balzer, Dieter, Dr.
Talstrasse 21
D-4358 Haltern (DE)**

**Beschreibung**

Die Erfindung betrifft die Verwendung von Alkylpolyglycosiden als Emulgatoren zur Herstellung von Polysiloxanöl- bzw. Polysiloxan-Paraffinöl-Emulsionen.

Siloxanöle erfahren manigfaltige Anwendungen u.a. als Trennmittel, Gleitmittel, Entschäumer, Hydrophobiermittel, Träger epidermisstärkender Mittel, in Kunststoffverarbeitung, Glas- und Keramikindustrie, Textilherstellung sowie bei Reinigungsmitteln, kosmetischen und dermatologischen Formulierungen, etc. Die bevorzugten Anwendungsformen hierbei sind wasserverdünnbare Öl-in-Wasser Emulsionen. Ihre Herstellung ist bekanntlich schwierig (vgl. Ullmanns Enzyklopädie der technischen Chemie, 3. Aufl., Bd. 15, S. 783) und erfordert gewöhnlich wasser- bzw. öllösliche Vermittler wie Alkohole, Amine, etc (DE-OS 1 033 894), hohe Emulgatorkonzentrationen und/oder hohe Scherkräfte kombiniert ggf. mit einem gelartigen Endzustand, der aufgrund der hohen Viskosität eine gewisse Stabilität impliziert (DE-OS 3 024 870). Andere Verfahren zur wasserexternen Siloxanölemulgierung sind auf relativ niedrige Molmassen der zu emulgierenden Substanzen beschränkt (DE-OS 3 045 083), bzw. sind nur bei erhöhter Temperatur unter stärkerer Gasentwicklung durchführbar (DE-OS 2 730 923): offensichtlich begleiten hier chemische Veränderungen des Polysiloxans den Emulgiervorgang. Die FR-A-2 017 240 beschreibt die Herstellung von Mischungen von Alkyl-Oligosacchariden, wobei mindestens 2, im Mittel aber 3 oder mehr Glycosyleinheiten vorhanden sind, und Alkanolen. Ein größerer Gehalt an höheren Alkanolen kann eine Verbesserung der Löslichkeit des Produktes ergeben oder die Viskosität erniedrigen, so daß es für Schmieröle geeignet sein kann. Die Emulgierung von Polysiloxanöl/Paraffinöl wird jedoch nicht beschrieben.

Es bestand daher die Aufgabe, Emulgatoren aufzufinden, die bei geringer Emulgatorkonzentration ohne Lösungsvermittler, bei geringen Scherraten und ohne Anwendung höherer Temperaturen die Herstellung von lagerstabilen, wasserexternen Polysiloxanemulsionen erlauben.

Die Aufgabe wurde durch die Verwendung von Alkylpolyglycosiden ohne Zusatz von irgendwelchen nichttensidischen Lösungsvermittlern als Emulgatoren für die Polysiloxanemulsionen gelöst.

Gegenstand der Erfindung ist daher die Verwendung von Alkylpolyglycosiden der Formel (I)

$$R\text{-}O\text{-}Z_n \qquad \text{(I)},$$

wobei R für einen linearen oder verzweigten, gesättigten oder ungesättigten Alkylrest mit 8 bis 16 C-Atomen und Z für einen Oligoglycosidrest stehen und n im Mittel 1 bis 5 bedeutet, als Emulgatoren zur Herstellung von lagerstabilen, wäßrigen Polysiloxanöl- oder Polysiloxan-Paraffinöl-Emulsionen.

Es wurde überraschend gefunden, daß diese Alkylpolyglycoside als Emulgatoren bei Polysiloxanen von unterschiedlicher Viskosität, Molmasse oder chemischer Struktur verwendet werden können. Außerdem sind diese Emulgatoren hervorragend biologisch abbaubar und besitzen eine geringe Toxizität. Die Emulgatoren lassen sich überraschenderweise auch bei Mischungen aus Polysiloxanöl und Paraffinöl verwenden, obwohl Verbindungen der Formel I im allgemeinen bei Paraffinöl keine befriedigende Emulgierwirkung zeigen.

Die erfindungsgemäß verwendeten Alkylpolyglycoside entsprechen der allgemeinen Formel (I)

$$R \text{-} O \text{-} Z_n, \qquad \text{(I)}$$

in der R für einen linearen oder verzweigten, gesättigten oder ungesättigten, Alkylrest mit 8 bis 16, vorzugsweise 9 bis 14, Kohlenstoffatomen und $Z_n$ für einen Oligoglycosidrest mit im Mittel n = 1 bis 5, vorzugsweise 1 bis 3, Hexose- oder Pentoseeinheiten oder Gemische davon steht.

Besonders vorzuziehen ist die Verwendung von linearen gesättigten Alkylpolyglycosiden mit 10 bis 14 Kohlenstoffatomen mit einem Glycosidierungsgrad n zwischen 1.1 und 2.

Die erfindungsgemäß verwendeten Alkylpolyglycoside können nach bekannten Verfahren ganz oder teilweise auf Basis nachwachsender Rohstoffe hergestellt werden. Beispielsweise wird Dextrose in Gegenwart eines sauren Katalysators mit n-Butanol zu Butyloligoglycosidgemischen umgesetzt, welche mit langkettigen Alkoholen ebenfalls in Gegenwart eines sauren Katalysators zu den gewünschten Alkyloligoglycosidgemischen umglycosidiert werden. Die Formel der Produkte ist in bestimmten Grenzen variierbar. Der Alkylrest R wird durch die Auswahl des langkettigen Alkohols festgelegt. Günstig aus wirtschaftlichen Gründen sind die großtechnisch zugänglichen Tensidalkohole mit 8 bis 16 C-Atomen, z.B. native Alkohole aus der Hydrierung von Fettsäuren bzw. Fettsäurederivaten, Ziegleralkohole und Oxoalkohole.

Der Oligoglycosylrest $Z_n$ wird einerseits durch die Auswahl des Kohlenhydrats und andererseits durch die Einstellung des mittleren Oligomerisationsgrades n z.B. nach DE-OS 19 43 689 festgelegt. Im Prinzip können bekanntlich Polysaccharide, Oligosaccharide und Monosaccharide, z.B. Stärke, Maltodextrine, Dextrose, Galaktose, Mannose, Xylose usw. zu Alkylpolyglycosiden umgesetzt werden. Besonders bevorzugt sind die großtechnisch verfügbaren Kohlenhydrate Stärke, Maltodextrine und Dextrose. Da die wirtschaftlich interessanten Alkylpolyglycosidsynthesen nicht regio- und stereoselektiv verlaufen, sind die Alkylpolyglycoside stets Gemische von Oligomeren, die ihrerseits Gemische verschiedener isomerer Formen darstellen. Sie liegen nebeneinander mit $\alpha$- und $\beta$-glycosidischen Bindungen in Pyranose- und Furanoseform vor. Auch die Verknüpfungsstellen zwischen zwei Saccharidresten sind unterschiedlich. Synthesebedingt können die Alkylpolyglycoside auch Begleitsubstanzen wie Restalkohole, Monosaccharide, Oligosaccharide und Oligoalkylpolyglycoside enthalten.

Ökologisch zählen die Alkylpolyglycoside zu den mildesten Tensiden, was insbesondere für kosmetische und pharmazeutische Anwendungen der Polysiloxanöle bzw. Polysiloxan-Paraffinölgemische von Interesse ist. So wurden bei Prüfungen der biologischen Abbaubarkeit im Coupled Unit-Test DOC-Werte von 95 bis 97 % erreicht.

Die Toxizitätsdaten mit LD 50 (Ratte) > 10.000 mg/kg, LC 50 (Goldorfe) 12-40 mg/l und EC 50 (Daphnia) 30 - 110 mg/l bei je 2 $C_{10}$ $C_{12}$– bzw. $C_{12}$ $C_{14}$-Alkylpolyglycosiden deuten ebenfalls eine im Vergleich mit vielen anderen Tensiden hervorragende Umweltverträglichkeit an.

Die bevorzugte Verfahrensweise zur Herstellung der Emulsion besteht nun darin, daß der erfindungsgemäße Emulgator bei Raumtemperatur in dem Polysiloxanöl bzw. Polysiloxan-Paraffin-Öl-Gemisch ohne größeren Scheraufwand gelöst oder dispergiert wird; gewöhnlich zeigen diese Flüssigkeiten eine über Tage konstante geringe Trübung. Sodann wird - wiederum ohne größere Scherkräfte - Wasser in die Lösung oder Dispersion eingerührt. Die hierbei erzielten Emulsionen sind gewöhnlich weiß bis bläulich-weiß und über Monate stabil. In wenigen Fällen beobachtete Aufrahmungen ließen sich durch geringes Scheren beseitigen (die genannten "geringen Scherkräfte" sind die im normalen chemischen Labor mittels Magnetrührer oder manuellem Schütteln üblichen).

Die Emulgatorkonzentration, bezogen auf die Ölphase, liegt gewöhnlich zwischen 2 und 40 %, vorzugsweise zwischen 5 und 30 %, wobei vor allem die Wirtschaftlichkeit entscheidend ist. Das Wasser-Öl-Verhältnis liegt gewöhnlich zwischen 100 und 0.2, vorzugsweise zwischen 50 und 0.3, wobei die Viskosität der Emulsion mit steigendem Gehalt der dispersen Phase ansteigt.

In einzelnen Fällen kann es nützlich sein, dem Alkylpolyglycosid andere Tenside als Coemulgatoren zuzusetzen. Die hier in Frage kommenden anionischen, kationischen, zwitterionischen und nichtionischen Tenside sollen im Verhältnis zu den alkylpolyglycosidischen ein Gewichtsverhältnis von 50 % nicht überschreiten.

Die folgenden Beispiele sollen die Erfindung erläutern.

### Beispiel 1

5 g eines $C_{10}$ $C_{12}$-Alkylpolyglycosids (Aktivgehalt 46 %, $C_{10}/C_{12}$ 4:1, D.P. 1.3 bestimmt via 1H-NMR, D.P. = Glycosidierungsgrad n)) wurden bei Raumtemperatur in 10 g Polydimethylsiloxanöl der Viskosität 500 c St unter geringem Rühren in etwa 20 sec dispergiert. Sodann werden in 1 bis 2 Minuten 85 ml VE-Wasser portionsweise in die etwas viskose Dispersion eingerührt. Es bildet sich eine bläulichweiße Emulsion, die auch nach Standzeiten von 2 bis 3 Monaten keine Anzeichen von Instabilität zeigt.

### Beispiel 2

5 g eines $C_{12}$ $C_{13}$-Alkylpolyglycosids (Aktivgehalt 55 %, $C_{12}/C_{13}$ 41:58, D.P. 1.2) wurden bei Raumtemperatur in 10 g einer 1:1-Mischung von Polydimethylsiloxanöl der Viskosität 500 c St und eines DAB 6 Paraffinöls, Viskosität 140 c St) dispergiert. Sodann werden wie in Beispiel 1 85 ml VE-Wasser eingerührt. Es bildet sich eine über Monate stabile weiße Emulsion. Dieses Ergebnis ist insofern überraschend, als der analoge Versuch mit reinem Paraffinöl zu einer Verteilung führt, die bereits nach Minuten aufrahmt und nach ca. 1 Stunde völlig separiert ist.

### Beispiel 3 bis 13

Die völlig analog Beispiel 1 durchgeführten Beispiele 3 bis 13 demonstrieren die wirkungsvolle Emulgierung des Polysiloxanöls zu o/w-Emulsionen durch die erfindungsgemäß verwendeten Alkylpolyglycoside (APG) bei Variation des Polysiloxanöls, der Emulgatorstruktur und Konzentration wie des Wasser-Öl-Verhältnisses (siehe Tabelle 1) bei Variation des Polysiloxanöls, der Emulgatorstruktur und Konzentration sowie des Wasser-Öl-Verhältnisses (siehe Tabelle 1).

Beispiel 14

1.2 g Alkylpolyglycosid $C_{10}$ $C_{13}$ $C_{1.6}$ und 1.15 g MARLIPAL [R] 24/50 ($C_{12}$ $C_{14}$-Fettalkoholoxethylat mit 5 mol Ethylenoxid/mol) wurden in 10 g eines 1:1-Gemisch aus Dimethylpolysiloxanöl der Viskosität 500 c St und eines DAB 6 Paraffinöls der Viskosität 140 c St dispergiert. Sodann wurde, wie in Beispiel 1, Wasser eingerührt. Es bildete sich eine weiße Emulsion von hoher Stabilität. Das Oxethylat allein hingegen besitzt bei dem hier vorliegenden Öl-Wasser-System keine Emulgierwirkung.

Tabelle 1

| Zusammensetzung | Beispiel | | | | | | | | | | |
|---|---|---|---|---|---|---|---|---|---|---|---|
| | 3 | 4 | 5 | 6 | 7 | 8 | 9 | 10 | 11 | 12 | 13 |
| Dimethylpolysiloxanöle, | | | | | | | | | | | |
| Visk. 100 c St | 10 | | | | | | | | | | |
| 250 | | 10 | | | | | | | | | |
| 500 | | | | | | 5 | 5 | 5 | 35 | 3.3 | 60 |
| 2 000 | | | 10 | | | | | | | | |
| Diphenylpolysiloxanöl, | | | | | | | | | | | |
| Visk. 200 c St | | | | 10 | 5 | | | | | | |
| Paraffinöl DAB 6, | | | | | | | | | | | |
| Visk. 140 c St | | | | | 5 | 5 | 5 | 5 | 5 | 6.7 | |
| Wasser | 88 | 88 | 88 | 88 | 88 | 88 | 87 | 89 | 60 | 88 | 28 |
| C10C12 (APG (G1.3)) | 2.3 | 2.3 | 2.3 | 2.3 | | | | 1 | 4.6 | 2.3 | 12 |
| C12C13 (APG (G1.2)) | | | | | 2.3 | | | | | | |
| C12C13 (APG (G1.2)) | | | | | | | 2.5 | | | | |
| C12C14 (APG (G1.2)) | | | | | | 2.4 | | | | | |
| Emulsionsstabilität * nach 3 Tagen | ++ | ++ | ++ | ++ | ++ | + | ++ | ++ | ++ | ++ | ++ |

* ++ sehr stabil, + stabil, geringe aber leicht redispergierbare Aufrahmung

## Patentansprüche

1. Verwendung von Alkylpolyglycosiden der Formel (I)

   R-O-Z$_n$   (I),

   wobei R für einen linearen oder verzweigten, gesättigten oder ungesättigten Alkylrest mit 8 bis 16 C-Atomen und Z für einen Oligoglycosidrest stehen und n im Mittel 1 bis 5 bedeutet,
   als Emulgatoren zur Herstellung von lagerstabilen, wäßrigen Polysiloxanöl- oder Polysiloxan-Paraffinöl-Emulsionen.

2. Verwendung von Alkylpolyglycosiden nach Anspruch 1,
   dadurch gekennzeichnet,
   daß in Formel (I)
   R für einen linearen, gesättigten Alkylrest mit 10 bis 14 C-Atomen und
   Z für einen Oligoglycosidrest stehen und
   n im Mittel 1,1 bis 2,0 bedeutet.

3. Verwendung von Alkylpolyglycosiden nach den Ansprüchen 1 und 2,
   dadurch gekennzeichnet,
   daß neben Verbindungen der Formel I noch weitere übliche Tenside enthalten sind.

## Claims

1. The use of an alkyl polyglycoside of the formula (I)

   R-O-Z$_n$   (I),

   where R is a linear or branched, saturated or unsaturated alkyl radical having 8 to 16 C atoms and Z is an oligoglycoside radical, and n is on average 1 to 5,
   as an emulsifier for the preparation of storage-stable, aqueous emulsions of polysiloxane oil or polysiloxane/paraffin oil.

2. The use of an alkyl polyglycoside according to claim 1, characterised in that, in formula (I),
   R is a linear, saturated alkyl radical having 10 to 14 C atoms and
   Z is an oligoglycoside radical, and
   n is on average 1.1 to 2.0.

3. The use of an alkyl polyglycoside according to claim 1 or 2, characterised in that, in addition to a compound of the formula I, the emulsion also comprises another customary surfactant.

## Revendications

1. L'utilisation d'alkyl-poly-glycosides de la formule (I)

   R-O-Z$_n$   (I)

   dans laquelle R représente un radical alkyle, linéaire ou ramifié, saturé ou non-saturé, qui comporte de 8 à 16 atomes de carbone, et Z représente un radical oligo-glycoside et $\underline{n}$ a en moyenne une valeur de 1 à 5,
   en tant qu'émulsifiants pour préparer des émulsions aqueuses, stables au stockage, d'huile de polysiloxane ou d'un mélange de polysiloxane et d'huile de paraffine.

2. L'utilisation des alkyl-poly-glycosides selon la revendication 1,
   caractérisée en ce que, dans la formule (I),
   R représente un radical alkyle linéaire saturé comportant de 10 à 14 atomes de carbone et
   Z représente un radical oligo-glycoside, et
   $\underline{n}$ a en moyenne une valeur de 1, 1 à 2,0.

3. L'utilisation d'alkyl-poly-glycosides selon les revendications 1 et 2,
caractérisée en ce que, à côté des composés de la formule (I), sont encore présents d'autres tensioactifs usuels.